# EUROPEAN PATENT APPLICATION

(11) **EP 4 580 261 A1**
(43) Date of publication of application: **02.07.2025**
(21) Application number: 23867206.7
(22) Date of filing: 23.08.2023
(51) Int. Cl.: H04W 52/02, H04W 76/28

(54) **DISCONTINUOUS RECEPTION METHOD AND APPARATUS**

(30) Priority: 23.09.2022 CN 202211166990
(71) Applicant: Honor Device Co., Ltd., Shenzhen, Guangdong 518040 (CN)
(72) Inventor: ZHANG, Jian, Shenzhen, Guangdong 518040 (CN)
(74) Representative: Isarpatent
(86) International application number: PCT/CN2023/114371
(87) International publication number: WO 2024/060913

(57) **Abstract**

The disclosure provides a method and apparatus for discontinuous reception. The method includes: receiving indication information transmitted by a network device, where the indication information is used for indicating whether data arrive ahead of time or indicating that data arrive with lag; and monitoring a physical downlink control channel according to the indication information. According to the solution, when the indication information transmitted by the network device and indicating whether the data arrive ahead of time or arrive with lag is received, the physical downlink control channel is monitored according to the indication information, such that reception of the data arriving ahead of time or arriving with lag caused by jitter is guaranteed, and loss of such data is prevented. On the premise of that, a time length of an on duration timer in connected mode discontinuous reception does not need to be prolonged for completely covering a jitter interval, so as to further save power.

## Description

The disclosure claims the priority to Chinese Patent Application No. 202211166990.7, filed with the China National Intellectual Property Administration on September 23, 2022 and entitled "METHOD AND APPARATUS FOR DISCONTINUOUS RECEPTION", which is incorporated in its entirety herein by reference.

### TECHNICAL FIELD

The disclosure relates to the field of communication, and in particular to a method and apparatus for discontinuous reception.

### BACKGROUND

Extended reality (XR) provides a new human-computer interaction method. However, an XR service, featuring a large data volume and a high delay requirement, poses new challenges to development of a wireless network. Connected mode discontinuous reception (CDRX) is a power saving mechanism that is widely applied. However, when the CDRX technology is directly applied to the XR service, it is found that a power saving amplitude is limited. The main reason is that jitter exists in an actual XR system. That is, when a base station receives a data packet (a data frame) of the XR service, jitter exists due to a frame coding delay and a change of network transmission time. It can be understood that when a terminal periodically transmits a data frame of an XR service, an actual moment at which the base station receives the data frame is not a completely corresponding periodical arrival moment. To prevent data loss, a time length of an on duration timer in the CDRX needs to be prolonged, so as to completely cover a jitter interval. However, this leads to a reduced power saving effect.

How to guarantee a power saving effect in a scenario of jitter is therefore a technical problem to be resolved urgently.

### SUMMARY

The disclosure provides a method and apparatus for discontinuous reception, so as to guarantee an energy and power saving effect.

According to a first aspect, a method for discontinuous reception is provided and is applied to user equipment. The method includes: receiving indication information transmitted by a network device, where the indication information is used for indicating whether data arrive ahead of time or indicating that data arrive with lag; and monitoring a physical downlink control channel according to the indication information.

In the technical solution of the disclosure, when the indication information transmitted by the network device and indicating whether the data arrive ahead of time or arrive with lag is received, the physical downlink control channel is monitored according to the indication information, such that reception of the data arriving ahead of time or arriving with lag caused by jitter is guaranteed, and loss of such data is prevented. On the premise of that, a time length of an on duration timer in connected mode discontinuous reception does not need to be prolonged for completely covering a jitter interval, so as to further save power.

In embodiments of the disclosure, the data may be a data frame of an extended reality (XR) service, a data packet of another service, or other data that can be transmitted and received in a connected mode discontinuous reception (CDRX) mechanism, which are not limited.

In conjunction with the first aspect, in some implementations of the first aspect, the indication information includes first information, the first information is used for indicating whether the data arrive ahead of time, and arrival ahead of time is used for indicating that the data arrive before the first information is received; and the monitoring a physical downlink control channel (PDCCH) according to the indication information may include: monitoring, when the data arrive ahead of time, the PDCCH according to a configuration parameter of CDRX indicated by the first information.

In conjunction with the first aspect, in some implementations of the first aspect, the first information includes first downlink control information (DCI), and a first preset bit in the first DCI is used for indicating whether the data arrive ahead of time.

In conjunction with the first aspect, in some implementations of the first aspect, the first DCI is UE-group common signaling DCI.

In conjunction with the first aspect, in some implementations of the first aspect, at least one bit other than the first preset bit in the first DCI is used for indicating at least one parameter in the configuration parameters of the CDRX or indicating an identifier of a parameter set of the configuration parameters of the CDRX, and the parameter set includes at least one configuration parameter of the CDRX.

In conjunction with the first aspect, in some implementations of the first aspect, the configuration parameters of the CDRX includes at least one of offset, an on duration timer, an inactivity timer, or a search space set group; and the monitoring, when the data arrive ahead of time, the PDCCH according to a configuration parameter of CDRX indicated by the first information may include at least one of the following operations:
starting the on duration timer ahead of time according to the offset indicated by the first information, and monitoring the PDCCH in the on duration timer; or performing monitoring by using the dense search space set group according to an indication of the first information; or performing monitoring according to the on duration timer indicated by the first information; or performing monitoring according to the inactivity timer indicated by the first information.

In conjunction with the first aspect, in some implementations of the first aspect, the method further includes: performing monitoring according to a first preset configuration parameter of the CDRX when the data do not arrive ahead of time, where the first preset configuration parameter is a preset configuration parameter corresponding to a situation that the data do not arrive ahead of time. That is, in this implementation, two configuration parameters of the first preset configuration parameter and a second preset configuration parameter are preconfigured for the CDRX. Two cases, that is, data do not arrive ahead of time and data arrive ahead of time, correspond to the first preset configuration parameter and the second preset configuration parameter respectively. Thus the user equipment may select the first preset configuration parameter for monitoring when it is determined, according to the received first information, that the data do not arrive ahead of time.

In conjunction with the first aspect, in some implementations of the first aspect, the indication information includes second information, and the second information is used for indicating that the data arrive with lag; and the monitoring a PDCCH according to the indication information may include: monitoring the PDCCH according to the second information.

In conjunction with the first aspect, in some implementations of the first aspect, the second information includes second DCI; the second DCI does not schedule a corresponding physical downlink shared channel (PDSCH); and the monitoring the PDCCH according to the second information may include: monitoring the PDCCH by starting a first timer in response to the second DCI; or monitoring the PDCCH according to a configuration parameter of CDRX indicated by the second DCI.

In conjunction with the first aspect, in some implementations of the first aspect, the case that the second DCI does not schedule the corresponding PDSCH is indicated by using a time domain resource assignment (TDRA) domain in the second DCI.

In conjunction with the first aspect, in some implementations of the first aspect, at least one bit other than the TDRA domain in the second DCI is used for indicating at least one parameter in the configuration parameters of the CDRX or indicating an identifier of a parameter set of the configuration parameters of the CDRX, and the parameter set includes at least one configuration parameter of the CDRX.

In conjunction with the first aspect, in some implementations of the first aspect, the second information includes third DCI; a PDSCH scheduled by the third DCI is a padding PDSCH; and the monitoring the PDCCH according to the second information may include: monitoring the PDCCH by starting a second timer in response to the third DCI.

According to a second aspect, a method for discontinuous reception is provided and is applied to a network device. The method includes: transmitting indication information to user equipment (UE), where the indication information is used for indicating whether data arrive ahead of time or for indicating that data arrive with lag.

It should be understood that reference may be made to the related description of the first aspect for a technical effect of the technical solution of the second aspect, which is not repeated herein.

In conjunction with the second aspect, in some implementations of the second aspect, the indication information includes first information, the first information is used for indicating whether the data arrive ahead of time, and arrival ahead of time is used for indicating that the data arrived when the first information is transmitted.

In conjunction with the second aspect, in some implementations of the second aspect, the first information includes first downlink control information (first DCI). A first preset bit in the first DCI is used for indicating whether the data arrive ahead of time.

In conjunction with the second aspect, in some implementations of the second aspect, the first DCI is UE-group common signaling DCI.

In conjunction with the second aspect, in some implementations of the second aspect, at least one bit other than the first preset bit in the first DCI is used for indicating at least one parameter in the configuration parameters of the CDRX or indicating an identifier of a parameter set of the configuration parameters of the CDRX, and the parameter set includes at least one configuration parameter of the CDRX.

In conjunction with the second aspect, in some implementations of the second aspect, the configuration parameters of the CDRX includes at least one of offset, an on duration timer, an inactivity timer, or a search space set group.

In conjunction with the second aspect, in some implementations of the second aspect, the indication information includes second information, and the second information is used for indicating that the data arrive with lag.

In conjunction with the second aspect, in some implementations of the second aspect, the second information includes second DCI; and the second DCI does not schedule a corresponding physical downlink shared channel (PDSCH), and the second DCI is used for indicating arrival with lag.

In conjunction with the second aspect, in some implementations of the second aspect, the case that the second DCI does not schedule the corresponding PDSCH is indicated by using a time domain resource assignment (TDRA) domain in the second DCI.

In conjunction with the second aspect, in some implementations of the second aspect, at least one bit other than the TDRA domain in the second DCI is used for indicating at least one parameter in the configuration parameters of the CDRX or indicating an identifier of a parameter set of the configuration parameters of the CDRX, and the parameter set includes at least one configuration parameter of the CDRX.

In conjunction with the second aspect, in some implementations of the second aspect, the second information includes third DCI; and a PDSCH scheduled by the third DCI is a padding PDSCH.

According to a third aspect, an apparatus for discontinuous reception is provided. The apparatus includes a unit that is formed by software and/or hardware and that is configured to perform any method according to the first aspect or the second aspect.

According to a fourth aspect, an electronic device is provided. The electronic device includes a memory, a processor, and a computer program stored in the memory and capable of being run on the processor. When the processor executes the computer program, the electronic device may implement any method according to the first aspect or the second aspect.

Optionally, when the electronic device is configured to implement any method according to the first aspect, the electronic device may be user equipment. When the electronic device is configured to implement any method according to the second aspect, the electronic device may be a network device.

According to a fifth aspect, a chip is provided. The chip includes a processor. The processor is configured to read and perform a computer program stored in a memory. When the computer program is executed by the processor, an electronic device where the chip is located may implement any method according to the first aspect or the second aspect.

Optionally, the chip further includes a memory, and the memory is electrically connected to the processor.

Optionally, the chip may further include a communication interface.

According to a sixth aspect, a computer-readable storage medium is provided. The computer-readable storage medium stores a computer program. The computer program may implement any method according to the first aspect or the second aspect when executed by an electronic device.

According to a seventh aspect, a computer program product is provided. The computer program product includes a computer program. The computer program may implement any method according to the first aspect or the second aspect when executed by an electronic device.

### BRIEF DESCRIPTION OF DRAWINGS

FIG. 1 is a schematic diagram of an applicable network scenario according to an embodiment of the disclosure;
FIG. 2 is a schematic diagram of periodic transmission of a data frame of an extended reality (XR) service according to an embodiment of the disclosure;
FIG. 3 is a schematic flowchart of a method for discontinuous reception according to an embodiment of the disclosure;
FIG. 4 is a schematic flowchart of another method for discontinuous reception according to an embodiment of the disclosure;
FIG. 5 is a schematic diagram comparing a method for discontinuous reception and a conventional connected mode discontinuous reception (CDRX) method according to an embodiment of the disclosure;
FIG. 6 is a schematic diagram comparing another method for discontinuous reception and a conventional CDRX method according to an embodiment of the disclosure;
FIG. 7 is a schematic diagram comparing yet another method for discontinuous reception and a conventional CDRX method according to an embodiment of the disclosure;
FIG. 8 is a schematic structural diagram of first DCI according to an embodiment of the disclosure;
FIG. 9 is a schematic diagram of an apparatus for discontinuous reception according to an embodiment of the disclosure; and
FIG. 10 is a schematic diagram of a hardware structure of an electronic device according to an embodiment of the disclosure.

### DESCRIPTION OF EMBODIMENTS

The following describes solutions of embodiments of the disclosure with reference to the accompanying drawings. The method for discontinuous reception provided in the disclosure may be applied to various wireless communication systems.

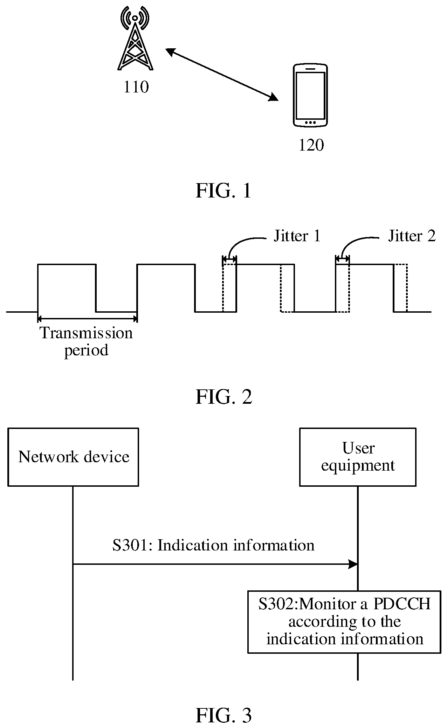

FIG. 1 is a schematic diagram of an applicable network scenario according to an embodiment of the disclosure; as shown in FIG. 1, the wireless communication system in such a scenario includes at least one network device 110 and at least one piece of user equipment (UE) 120. The wireless communication system may be a long term evolution (LTE) network, a fifth generation (5G) network, a future sixth generation (6G) network, or various subsequent evolved wireless communication systems that can bear an extended reality (XR) service.

In the embodiment of the disclosure, the network device 110 may include an access network (AN) device and a radio access network (RAN) device. The access network device, for example, a base station (for example, an access point), may refer to a device that is in communication with a wireless terminal device in an air interface through one or more cells. The base station, for example, may be an evolved Node B (NodeB, eNB, or e-NodeB), may include a next generation node B (gNB), a next generation evolved nodeB (ng-e B), or an enhanced next generation node B (gNB): an enhanced next generation base station in the 5G system, or may include a centralized unit (CU), a distributed unit (DU), etc. in a cloud radio access network (Cloud RAN) system, which are not listed one by one.

The user equipment may alternatively be referred to as a terminal device, and may be a mobile phone, a smartwatch, a tablet computer, a notebook computer, an XR terminal, an in-vehicle terminal, etc. The XR terminal may further include a virtual reality (VR) terminal, an augmented reality (AR) terminal, and a mixed reality (MR) terminal.

For ease of understanding the solution in the embodiment of the disclosure, jitter of an XR service is described below with reference to FIG. 2. FIG. 2 is a schematic diagram of periodic transmission of a data frame of an XR service according to an embodiment of the disclosure. As shown in FIG. 2, the data frame of the XR service is periodically transmitted. For example, if periodic transmission is performed at a rate of 120 frames per second, a transmission period is 8.33 milliseconds. That is, the 8 transmission period in FIG. 2 may be 8.33 milliseconds. Ideally, user equipment periodically receives and transmits the data frame, and a network device periodically receives and transmits the data frame at a same period. For example, one piece of user equipment periodically transmits data frames, a network device periodically receives these data frames at a same period and transmits these data to another piece of user equipment at the same period, and the another piece of user equipment also periodically receives these data frames in the same period. However, as described above, due to a frame coding delay and changes of network transmission time of the XR service, jitter exists when the network device receives a data frame. For example, a time length of arrival ahead of time, arrival with lag, etc., may be referred to as jitter. As shown in FIG. 2, jitter 1 indicates jitter of the time length of arrival ahead of time, and jitter 2 indicates jitter of the time length of arrival with lag. Researchers find that the jitter conforms to a truncated Gaussian distribution, specifically, a truncated Gaussian distribution between -4 milliseconds to +4 milliseconds. It should be understood that a value of the jitter is a random variable between -4 milliseconds to +4 milliseconds. That is, in FIG. 2, a value range of jitter 2 is (0, +4], a value range of jitter 1 is [-4, 0), and the unit is millisecond.

For this special case, when the CDRX technology is directly applied to the XR service, if a configured on duration timer is too short, reception of a data frame is missed due to jitter. If a long enough on duration timer is configured to prevent a miss, the on duration timer at least needs to completely cover jitter duration. With the above example as an example, the on duration timer needs at least 8 milliseconds, which reduces a power saving effect, that is, the on duration timer occupies 8 milliseconds in a CDRX period. Moreover, a too long or too short inactivity timer also has a similar problem described above, that is, a too long inactivity timer consumes electricity, and a too short inactivity timer misses a data frame.

For the above problem, in the embodiments of the disclosure, at a moment before the on duration timer, the network device informs the user equipment in advance of whether data arrive ahead of time, and/or at a moment after the on duration timer is started, if no data are received, the network device informs the user equipment that data arrive with lag. Thus the user equipment may use, according to such an indication, a corresponding configuration parameter of the CDRX to monitor a physical downlink control channel (PDCCH). However, it should be understood that the method of the embodiment of the disclosure may be applied to the XR service, and may alternatively be applied to other data transmission scenarios.

FIG. 3 is a schematic flowchart of a method for discontinuous reception according to an embodiment of the disclosure.

S301: A network device transmits indication information to UE.

The indication information is used for indicating whether data arrive ahead of time or for indicating that data arrive with lag.

In the embodiment of the disclosure, the data may be a data frame of an extended reality (XR) service, a data packet of another service, or other data that can be transmitted and received in a connected mode discontinuous reception (CDRX) mechanism, which are not limited.

The arrival ahead of time may be understood as that the data arrive before the indication information of whether the data arrive ahead of time is transmitted. The arrival with lag may be understood as that the data do not arrive before the indication information of arrival with lag is transmitted.

That is, the network device may transmit the indication information to the UE, and after receiving the indication information, the UE may perform S302.

In an implementation, the indication information includes first information. The first information is used for indicating whether the data arrive ahead of time. For the UE, the arrival ahead of time is used for representing that the data arrive before the UE receives the first information. For the network device, the arrival ahead of time is used for representing that the data arrive before the network device transmits the first information.

In an example, the network device may periodically transmit the first information to the UE. If the network device has received the data when the first information is transmitted, the network device uses the first information to indicate that the data arrive ahead of time. If the network device does not receive data when the first information is transmitted, the network device uses the first information to indicate that the data do not arrive ahead of time. It should be understood that arrival not ahead of time may include two possibilities of normal arrival and arrival with lag. It should be further understood that the first information is transmitted regardless of whether the data are received. The first information is periodically transmitted, and carries, when transmitted, an indication whether the data are received at a transmission moment.

In another example, the first information transmitted by the network device to the UE is not periodically transmitted, but the first information is not transmitted when the data do not arrive ahead of time. In this case, if no first information is decoded by the UE, it is considered by default that the data do not arrive ahead of time.

In an example, the first information includes first downlink control information (DCI), and a first preset bit in the first DCI is used for indicating whether the data arrive ahead of time. That is, whether the data arrive ahead of time may be indicated by using the DCI.

Optionally, the first DCI may be UE-group common signaling DCI. That is, one piece of DCI includes indications for a plurality of pieces of UE. For target UE, a field (a bit) corresponding to the UE may be found from the indications, and then indicated information is read from the field. For example, target UE in the first DCI corresponds to N bits, and a bit of the N bits may be used as the first preset bit. For example, a first bit in the N bits may be used as the first preset bit, and the first bit includes an indication of whether the data arrive ahead of time. The case that the first preset bit indicates that the data arrive ahead of time may be, for example, that when the first preset bit is 0, it indicates that the data do not arrive ahead of time, and when the first preset bit is 1, it indicates that the data arrive ahead of time.

A structure of the first DCI may be user-defined, or may be implemented by modifying a structure of existing DCI. For example, the first DCI may be a structure of DCI2_6, and bits of the DCI2_6 are redefined to satisfy a requirement of the first DCI.

Optionally, since the indication of whether the data arrive ahead of time may be achieved by using only one bit, the configuration parameter of the CDRX may be further indicated by using some remaining bits, such that when receiving the first information, the UE may not only know whether the data arrive ahead of time, but also monitor the PDCCH according to the configuration parameter indicated by the first information.

In another example, at least one bit other than the first preset bit in the first DCI is used for indicating at least one parameter in the configuration parameters of the CDRX or indicating an identifier of a parameter set of the configuration parameters of the CDRX, and the parameter set includes at least one configuration parameter of the CDRX.

The configuration parameters of the CDRX may include at least one of offset, an on duration timer, an inactivity timer, or a search space set group.

For example, the parameter set of the configuration parameters of the CDRX may include, for example, configuration parameters of different values. Identifiers of two parameter sets may be represented by, for example, index value 1 and index value 2.

For example:

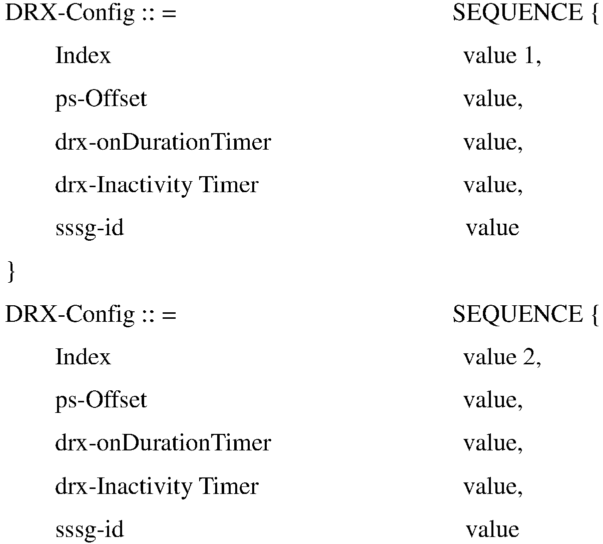

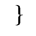

It can be seen that both of the two data sets may include setting values of several configuration parameters of offset, an on duration timer, an inactivity timer, and an SSSG. When an identifier of a parameter set is indicated by using the first information, the parameter set may be found, and the PDCCH may be monitored by using configuration parameters in the parameter set.

It should be noted that while indicating whether the data arrive ahead of time, the first information may further implicitly indicate that a dense SSSG or a sparse SSSG is used. That is, when the first information indicates that the data arrive ahead of time, it may implicitly indicate that the dense SSSG is used. When the first information indicates that the data do not arrive ahead of time, it may implicitly indicate that the sparse SSSG is used. Moreover, when indicating the configuration parameter of the CDRX, the first information may further explicitly indicate that a dense SSSG or a sparse SSSG is used. That is, whether the SSSG is sparse or dense may be indicated by using the first preset bit together, or may be indicated by using a bit (a bit other than the first preset bit) used for indicating the configuration parameter of the CDRX.

In some cases, when the data are compact enough, a configuration parameter of the CDRX in a next period may further be indicated by using a media access control (MAC) control element (CE) in a previous period of the CDRX.

In another implementation, the indication information may include second information. The second information is used for indicating that the data arrive with lag. For the UE, the arrival with lag is used for representing that the data do not arrive when the second information is received. For the network device, the arrival with lag is used for representing that the data do not arrive when the second information is transmitted.

It may be understood that the second information is transmitted at a moment after the on duration timer is started and before the on duration timer ends or an end moment. Thus if the data are received, no lag occurs, and if the data are not received, lag occurs. In this case, the second information is transmitted to make the UE deal with the lag in a targeted manner. For example, a newly defined timer may be started, or a known timer having a time length greater than that of the on duration timer may be directly started, to guarantee reception of the lag data. On this premise, there is no need to prolong the time length of the on duration timer in the CDRX for completely covering a jitter interval, that is, a shorter on duration timer is used when no lag occurs, and a longer timer is used only when lag occurs.

It should be further understood that each time the on duration timer is started, one piece of second information may be transmitted by the network device when the data are not received yet, that is, the second information is transmitted only when lag occurs. In this way, meaningless indications are avoided. That is, when there is no lag, data receiving and transmitting requirements can be satisfied merely by relying on a mechanism of the CDRX, and indication of no lag is not needed. In this way, signaling is saved accordingly. That is, a number of times of transmitting the indication information is reduced. The UE correspondingly reduces a number of times of receiving the indication information and processing the indication information.

In an example, the second information includes second PCI. The second DCI does not schedule a corresponding physical downlink shared channel (PDSCH), and the second DCI is used for indicating that the data arrive with lag. In this case, if receiving the second information, the UE can learn two things: the data lag behind, and the DCI does not schedule the PDSCH.

It should be noted that the data arriving with lag are indicated by using DCI of a special structure, that is, the second DCI, or are indicated by the fact that the second DCI does not schedule the PDSCH. It may be understood that when the data do not arrive yet, the network device transmits second DCI, and then the UE finds, after receiving the second DCI, that the second DCI is special DCI that does not schedule a PDSCH, and knows that the data arrive with lag.

Optionally, a time domain resource assignment (TDRA) indication domain in the second DCI may be used for indicating that the second DCI does not schedule the corresponding PDSCH. For example, an entry corresponding to K0 may be first configured by means of radio resource control (RRC). When receiving the second DCI, the UE finds the corresponding entry from the TDRA domain in the second DCI, reads from the entry that a value of K0 is -1, then learns that the second DCI does not schedule the corresponding PDSCH, and further learns that the data arrive with lag.

In another example, at least one bit other than the bit (for example, the TDRA domain) used for indicating that the data arrive with lag in the second DCI is used for indicating at least one parameter in the configuration parameters of the CDRX or indicating an identifier of a parameter set of the configuration parameters of the CDRX, and the parameter set includes at least one configuration parameter of the CDRX. In this case, if receiving the second DCI, the UE may learn three things: The data lag behind, the DCI does not schedule the corresponding PDSCH, and the configuration parameter of the CDRX indicated by the second DCI can be parsed out.

In still another example, the second information includes third DCI; and a PDSCH scheduled by the third DCI is a padding PDSCH. In this case, if the UE receives the third DCI and decodes the padding PDSCH when decoding the PDSCH corresponding to the third DCI, the UE may learn that the data lag behind.

After receiving the indication information, the UE performs S302.

S302: A PDCCH is monitored according to the indication information.

As described above, the indication information may indicate different situations. Thus in S302, the PDCCH may be monitored according to monitoring policies corresponding to different indication information.

In an implementation, when the indication information includes first information, the first information may include two indications. The first indication is to indicate whether the data arrive ahead of time, and the second indication is to indicate the configuration parameter of the CDRX.

In an example, the configuration parameter of the CDRX is also implicitly indicated through an indication indicating whether data arrive ahead of time. After receiving the first information, the UE monitors the PDCCH according to the configuration parameter of the CDRX implicitly indicated by the first information. For example, two configuration parameters of the CDRX may be preconfigured by using the RRC first, and respectively correspond to two cases of arrival ahead of time and arrival not ahead of time. After receiving the first information, the UE knows whether the data arrive ahead of time. If the data arrive ahead of time, the UE monitors the PDCCH by using the configuration parameter of the CDRX corresponding to the arrival ahead of time. If the data do not arrive ahead of time, the UE monitors the PDCCH by using the configuration parameters of the CDRX corresponding to the arrival not ahead of time.

For example, the two configuration parameters preconfigured for the CDRX are a first preset configuration parameter and a second preset configuration parameter. The case that the data do not arrive ahead of time corresponds to the first preset configuration parameter, and the case that the data arrive ahead of time corresponds to the second preset configuration parameter. Thus the user equipment may select the first preset configuration parameter for monitoring when it is determined, according to the received first information, that the data do not arrive ahead of time. The user equipment may select the second preset configuration parameter for monitoring when it is determined, according to the received first information, that the data arrive ahead of time. In this example, both the first preset configuration parameter and the second preset configuration parameter may be used as the configuration parameters of the CDRX indicated by the first information.

For another example, two configuration parameters may be preconfigured for the CDRX: the first preset configuration parameter and the second preset configuration parameter. The first preset configuration parameter is a configuration parameter used by default, that is, when the user equipment determines, according to the received first information, that the data do not arrive ahead of time, or decodes no first information, the user equipment uses the first preset configuration parameter by default for monitoring. When the user equipment determines, according to the received first information, that the data arrive ahead of time, the user equipment selects the second preset configuration parameter for monitoring.

In another example, at least one bit other than the first preset bit in the first DCI is used for indicating at least one parameter in the configuration parameters of the CDRX or indicating an identifier of a parameter set of the configuration parameters of the CDRX. The parameter set includes at least one configuration parameter of the CDRX. It can be seen that, in this example, the configuration parameters of the CDRX are in an explicit indication form. When receiving the first information, the UE can know, from the first preset bit, whether the data arrive ahead of time, and can further know, from bits other than the first preset bit, the configuration parameter of the CDRX used when the PDCCH is subsequently monitored.

In a possible implementation, S302 may include at least one of the following operations:
the on duration timer is started ahead of time according to the offset indicated by the first information, and the PDCCH is monitored in the on duration timer; or monitoring is performed by using a dense SSSG according to an indication of the first information; or monitoring is performed according to an on duration timer indicated by the first information; or monitoring is performed according to an inactivity timer indicated by the first information.

That is, according to one or more configuration parameters specifically indicated by the first information, monitoring is performed according to an indicated specific parameter value. For example, the UE determines, according to the indication of the first information, that the data arrive ahead of time, and starts the on duration timer ahead of time according to a value of the offset indicated by the first information, or performs monitoring by using a dense SSSG based on the arrival ahead of time, and the time length of the on duration timer may be shortened, and the like, which are not listed one by one.

In another implementation, the indication information may further include second information. The second information is used for indicating that the data arrive with lag. When the second information is received, S302 may include that the UE monitors the PDCCH according to the second information.

For different cases of the second information, different operations are performed in S302.

In an example, when the second information includes the second DCI, S302 may include: the PDCCH is monitored by starting a first timer in response to the second DCI; or the PDCCH is monitored according to a configuration parameter of CDRX indicated by the second DCI.

The first timer is a new timer and may be referred to as a new timer. That is, a new timer with a longer time length is started. A reason is that the second DCI cannot naturally trigger an inactivity timer by using a CDRX mechanism, such that a new timer may be started. The new timer may be a newly defined timer, or may reuse an existing timer, for example, may be a retransmission timer, that is, a drx-RetransmissionTimerDL. It should be understood that in the implementation, when receiving the second DCI, the UE knows that the data arrive with lag, and that the PDSCH does not need to be decoded. If the second DCI does not indicate a configuration parameter of the CDRX, a first timer may be started, for example, the drx-RetransferssionTimerDL is started. If the second DCI further indicate a configuration parameter of the CDRX, the PDCCH is monitored according to the indicated configuration parameter of the CDRX. Assuming that the second DCI indicates a longer on duration timer, after receiving the second DCI, the UE knows that the data arrive with lag, that the DCI does not need to decode the PDSCH, and that the DCI indicate a configuration parameter of the CDRX such as a longer on duration timer, and the UE may start the longer on duration timer to perform monitoring.

In another example, when the second information includes the third DCI, S302 may include: the PDCCH is monitored by starting a second timer in response to the third DCI. The second timer may be an inactivity timer with a default length, or may be a preset longer inactivity timer for the data arriving with lag. In this example, since the third DCI is DCI of a complete structure, a timer may be started through natural triggering in a CDRX mechanism, for example, an inactivity timer is started.

According to the method shown in FIG. 3, when the indication information transmitted by the network device and indicating whether the data arrive ahead of time or arrive with lag is received, the physical downlink control channel is monitored according to the indication information, such that reception of the data arriving ahead of time or arriving with lag caused by jitter is guaranteed, and loss of such data is prevented. On the premise of that, a time length of an on duration timer in connected mode discontinuous reception does not need to be prolonged for completely covering a jitter interval, so as to further save power.

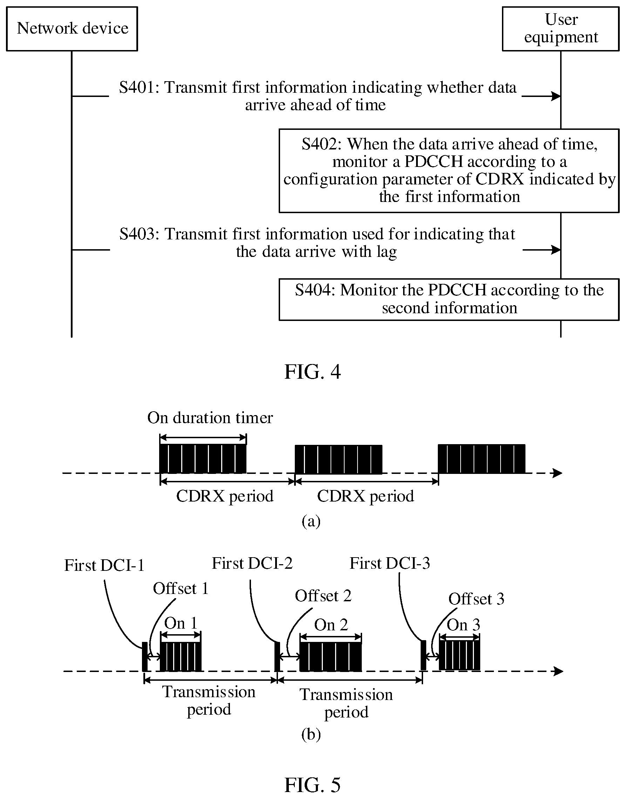

FIG. 4 is a schematic flowchart of another method for discontinuous reception according to an embodiment of the disclosure. FIG. 4 may be considered as a specific example of the method shown in FIG. 3.

S401: A network device transmits first information to UE, where the first information is used for indicating whether data arrive ahead of time.

S401 may be considered as an example of S301.

The network device may periodically transmit the first information to the UE.

The first information may be the above first DCI. For example, the first information may be UE-group common signaling DCI.

After receiving the first information, the UE performs S402.

S402: When the data arrive ahead of time, the UE monitors a PDCCH according to a configuration parameter of CDRX indicated by the first information.

S402 may be considered as an example of S302.

That is, the first information includes two indications. The first indication is to indicate whether the data arrive ahead of time, and the second indication is to indicate the configuration parameter of the CDRX.

In an implementation, the method further includes: When the data do not arrive ahead of time, the UE monitors the PDCCH according to the first preset configuration parameter of the CDRX.

In a possible implementation, S402 may include at least one of the following operations:
the on duration timer is started ahead of time according to the offset indicated by the first information, and the PDCCH is monitored in the on duration timer; or monitoring is performed by using a dense SSSG according to an indication of the first information; or monitoring is performed according to an on duration timer indicated by the first information; or monitoring is performed according to an inactivity timer indicated by the first information.

That is, according to one or more configuration parameters specifically indicated by the first information, monitoring is performed according to an indicated specific parameter value. For example, the UE determines, according to the indication of the first information, that the data arrive ahead of time, and starts the on duration timer ahead of time according to a value of the offset indicated by the first information, or performs monitoring by using a dense SSSG based on the arrival ahead of time, and the time length of the on duration timer may be shortened, and the like, which are not listed one by one.

In S401 and S402, when the indication information transmitted by the network device and indicating whether the data arrive ahead of time is received, the physical downlink control channel is monitored by the UE according to the indication information, such that reception of the data arriving ahead of time caused by jitter is guaranteed, and loss of such data is prevented. On the premise of that, a time length of the on duration timer in the CDRX does not need to be prolonged for completely covering a jitter interval, so as to further save power.

S403: The UE receives second information transmitted by the network device, and the second information is used for indicating that the data arrive with lag.

The second information may be the second DCI or the third DCI.

S403 may be considered as an example of S301.

S404: The UE monitors the PDCCH according to the second information.

S404 may be considered as an example of S302.

In S403 and S403, the network device mainly informs the UE of data lag by transmitting the second information, such that the UE can perform monitoring by using a corresponding configuration parameter. For example, when data lag occurs, a dense SSSG may be changed to a sparse SSSG, or a longer timer may be started, which is not listed one by one. A default configuration parameter may still be used when no data lag occurs. Thus reception of the data arriving with lag caused by jitter is guaranteed. On the premise of that, a time length of the on duration timer in the CDRX does not need to be prolonged for completely covering a jitter interval, so as to further save power. When S403 to S404 are performed separately, the UE may perform monitoring by using adapted configuration parameters of the CDRX to the cases of data lag and no data lag.

It should be understood that only S401 to S402 may be performed, only S403 to S404 may be performed, or S401 to S404 may be performed all, so as to further save power. S401 to S404 achieve a better power saving effect when being performed all.

FIG. 5 is a schematic diagram comparing a method for discontinuous reception and a conventional connected mode discontinuous reception (CDRX) method according to an embodiment of the disclosure. FIG. 5 mainly shows an example in which only a case of arrival ahead of time is processed, that is, a case that the indication information is used for indicating whether the data arrive ahead of time (that is, the indication information includes only the first information) in the method shown in FIG. 3, and a case that the method shown in FIG. 4 includes only S401 and S402.

It should be noted that FIG. 5 is mainly described by using an example in which the first information is periodically transmitted, but it is not limited that the first information needs to be periodically transmitted. For example, the network device may not transmit the first information when the data are not arrived ahead of time. In this case, if no first information is decoded by the UE, it is considered by default that the data do not arrive ahead of time.

As shown in FIG. 5 (a), in conventional CDRX, an on duration timer is periodically started, and has a fixed length. In this case, to prevent a packet loss in an XR service, the on duration timer needs to be long enough. As described above, jitter conforms to truncated Gaussian distribution from -4 milliseconds to +4 milliseconds. Thus the on duration timer needs to be greater than or equal to 8 milliseconds. A transmission period of the data in the XR service is 8.33 milliseconds, that is, the on duration timer occupies a larger proportion in a period of the CDRX, and a power saving effect is very limited. As shown in FIG. 5 (b), after the method in the embodiments of the disclosure is introduced, the first DCI (an example of the first information) is periodically transmitted. Whether the data arrive ahead of time is notified by using the first information. That is, a transmission period shown in FIG. 5 (b) is a transmission period of the first information. As shown in FIG. 5 (b), when first DCI-1 is transmitted, the data arrive ahead of time, an offset standard value may be reduced to offset 1, that is, the on duration timer is started ahead of time. Monitoring is performed by using a dense SSSG during the on duration timer. That is, density of white lines in a black box is denser during on 1 in the figure, and the time length of the on duration timer is shortened, that is, on 1 is shorter. When first DCI-2 is transmitted, the data do not arrive ahead of time, a default offset value, that is, offset 2, may still be used. The on duration timer is normally started. Monitoring is performed by using a sparse SSSG during the on duration timer. That is, density of white lines in a black box during on 2 in the figure is default density. When first DCI-3 is transmitted, the data arrive ahead of time, an offset standard value may be reduced to offset 3, that is, the on duration timer is started ahead of time. Monitoring is performed by using a dense SSSG during the on duration timer. That is, density of white lines in a black box is denser during on 3 in the figure, and the time length of the on duration timer is shortened, that is, on 3 is shorter.

As can be seen from FIG. 5, a wakeup time length in the CDRX is obviously shortened. This is because when the data are ahead of time, wakeup may be quicker, monitoring may be performed in a shorter time, and monitoring may be performed by using a dense SSSG. When the data are not ahead of time, monitoring may be performed by using a default configuration parameter, such that overall power is saved compared with a conventional jitter complete coverage method.

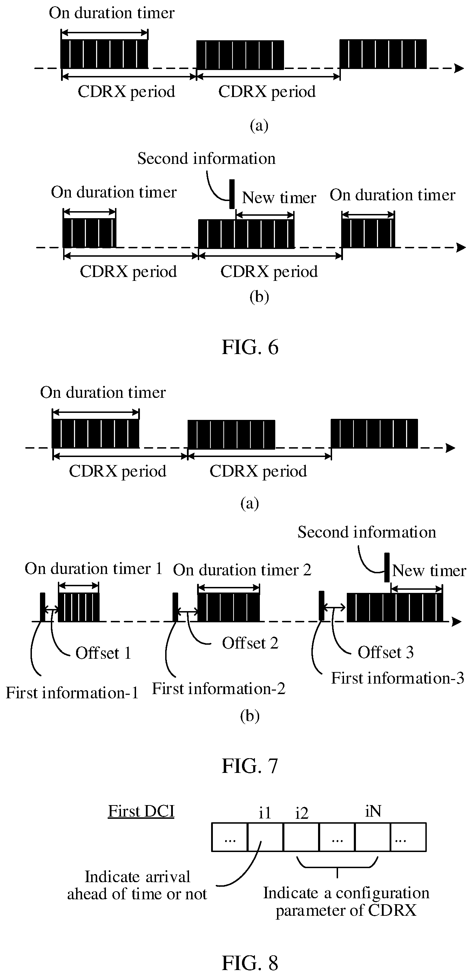

FIG. 6 is a schematic diagram comparing another method for discontinuous reception and a conventional CDRX method according to an embodiment of the disclosure. FIG. 6 mainly shows an example in which only a case of arrival with lag (that is, the indication information includes only the second information) is processed, that is, a case that the indication information is used for indicating whether the data arrive with lag in the method shown in FIG. 3, and a case that the method shown in FIG. 4 includes only S403 and S404.

Reference may be made to related descriptions of the content shown in FIG. 5 (a) for content shown in FIG. 6 (a), which is not repeated herein. As shown in FIG. 6 (b), after the method in the embodiments of the disclosure is introduced, before a timeout expires after the on duration timer is started, one piece of second information is transmitted, and data arriving with lag are notified by using the second information. As shown in FIG. 6 (b), when the second information is transmitted, the data arrive with lag, and then a timer may be started. The timer is represented by a new timer in the figure. As shown in FIG. 6 (b), the second information is not transmitted when no data lag occurs, and is transmitted when data lag occurs. It should be understood that the new timer herein may be a new timer or an existing timer triggered by the second DCI. For example, the first timer may be a drx-RetransferssionTimerDL, may be a timer started according to the configuration parameter of the CDRX indicated by the second DCI, or may be a second timer triggered by the third DCI. That is, as shown in FIG. 6 (b), a second CDRX period includes a new timer. During running of the timer, the UE monitors the PDCCH.

It can be seen from FIG. 6 that the wakeup time length in the CDRX is obviously shortened, this is because when no data lag occurs, monitoring is performed by using a shorter on duration timer. If lag occurs, monitoring may be performed by using a longer timer. When no data lag occurs, the default configuration parameter is continued to be used for monitoring, that is, a longer timer is used only when data lag occurs, and a shorter timer is used in other times. On the whole, compared with the conventional jitter complete coverage method, this method saves more power.

FIG. 7 is a schematic diagram comparing yet another method for discontinuous reception and a conventional CDRX method according to an embodiment of the disclosure. FIG. 7 mainly shows an example in which cases of arrival ahead of time and arrival with lag are both processed, that is, a case that the indication information includes the first information and the second information in the method shown in FIG. 3, and a case that the method shown in FIG. 4 includes S401 to S404.

It should be noted that FIG. 7 is mainly described by using an example in which the first information is periodically transmitted, but it is not limited that the first information needs to be periodically transmitted. For example, the network device may not transmit the first information when the data are not arrived ahead of time. In this case, if no first information is decoded by the UE, it is considered by default that the data do not arrive ahead of time.

Reference may be made to related descriptions of FIG. 5 (a) and FIG. 6 (a) for FIG. 7 (a), which is not repeated herein. As shown in FIG. 7 (b), after the method in the embodiments of the disclosure is introduced, the first information is periodically transmitted. Whether the data arrive ahead of time is notified by using the first information, and the second information is transmitted when data lag occurs. As shown in FIG. 7 (b), when first information-1 is transmitted, the data arrive ahead of time, and an offset standard value may be reduced to offset 1, that is, the on duration timer is started ahead of time. Monitoring is performed by using a dense SSSG during the on duration timer. That is, density of white lines in a black box is denser during on duration timer 1 in the figure, and the time length of the on duration timer is shortened, that is, on duration timer 1 is shorter. When first information-2 is transmitted, the data normally arrive, and default offset, that is, offset 2, may be used. The on duration timer is normally started. Monitoring is performed by using a sparse SSSG during the on duration timer. That is, density of white lines in a black box during on duration timer 2 in the figure is default density. When first information-3 is transmitted, the data do not arrive ahead of time, and default offset, that is, offset 3 (offset 2 is equal to offset 3) is used. The on duration timer is normally started. During starting of the on duration timer, one piece of second information is transmitted, and data arriving with lag are notified by using the second information. As shown in FIG. 7 (b), when the second information is transmitted, the data arrive with lag. Thus a new timer is started. That is, as shown in FIG. 7 (b), in the last longest timer, the UE continuously monitors the PDCCH.

FIG. 8 is a schematic structural diagram of first DCI according to an embodiment of the disclosure. As shown in FIG. 8, an i1^{th} bit of the first DCI is used for indicating whether data arrive ahead of time. For example, 1 may correspond to being ahead of time, and 0 may correspond to not being ahead of time. That is to say, when a value of the i1^{th} bit is 1, it indicates that the data arrive ahead of time. When the value of the i1^{th} bit is 0, it indicates that the data do not arrive ahead of time. The i1^{th} bit may be considered as an example of the first preset bit. As shown in FIG. 8, some or all of a total of N-1 bits from an i2^{th} bit to an iN^{th} bit of the first DCI may be used for indicating at least one parameter of the configuration parameters of the CDRX or indicating an identifier of a parameter set of the configuration parameters of the CDRX. That is, at least one bit (some or all of a total of N-1 bits from an i2^{th} bit to an iN^{th} bit being used as an example herein) other than the first preset bit (the i1^{th} bit being used as an example herein) in the above first DCI is used for indicating at least one configuration parameter of the CDRX or indicating a identifier of a parameter set of the CDRX. For example, the N-1 bits may be used for indicating offset, for example, in slot or x milliseconds (x may be a value such as 0.125, and the unit is 0.125 milliseconds), from the first DCI to the on duration timer. The N-1 bits may represent a unit length of 1 to 32. For example, a value of the N-1 bits is 10, indicating that 10 * 0.125 = 1.25 milliseconds. For another example, three bits in the N-1 bits may be used to indicate an identifier of a used parameter set of the CDRX. For example, a value of the three bits is 0, indicating a parameter set with an index being 0. For yet another example, four bits in the N-1 bits may be used to indicate offset, and one bit in the N-1 bits may be used to indicate a density identifier of the SSSG. For yet another example, by default, the SSSG is sparse at other time, and the SSSG is changed to be dense only when the data are ahead, that is, the first bit is 1. For still another example, three bits in the N-1 bits may be used to indicate the offset, and two bits in the N-1 bits may be used to indicate the identifier of the used SSSG. A plurality of SSSGs are preconfigured by the RRC and are distinguished through identifiers. It should be understood that the values in the foregoing examples are merely for ease of understanding the solutions, and do not limit the solutions. Those skilled in the art may select values according to requirements.

The foregoing mainly describes the method for discontinuous reception in the embodiments of the disclosure with reference to the accompanying drawings. It should be understood that although the various steps in the flowcharts related to the embodiments described above are shown sequentially, the steps are not necessarily performed sequentially in the order shown in the figures. Unless otherwise explicitly specified in this application, execution of the steps is not strictly limited, and the steps may be performed in other sequences. Moreover, at least some of the steps in flowcharts in each embodiment may include a plurality of sub-steps or a plurality of stages. The steps or stages are not necessarily performed at the same moment but may be performed at different moments. Execution of the steps or stages is not necessarily performed in sequence, but may be performed alternately with other steps or at least some steps or stages of other steps. The following mainly describes the apparatus for discontinuous reception in the embodiments of the disclosure with reference to the accompanying drawings.

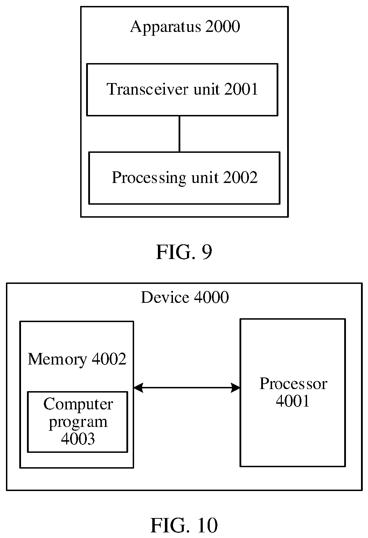

FIG. 9 is a schematic diagram of an apparatus for discontinuous reception according to an embodiment of the disclosure. As shown in FIG. 9, the apparatus 2000 includes a transceiver unit 2001 and a processing unit 2002. The apparatus 2000 may be integrated into user equipment or a network device.

The apparatus 2000 may be configured to perform steps performed by user equipment or a network device in any one of the foregoing methods for discontinuous reception. For example, the transceiver unit 2001 may be configured to perform S301, and the processing unit 2002 may be configured to perform S302. For another example, the transceiver unit 2001 may be configured to perform S401 and S403, and the processing unit 2002 may be configured to perform S402 and S404.

In an implementation, the apparatus 2000 may further include a storage unit for storing relevant data. The storage unit may be integrated in the processing unit 2002, or may be a unit independent of the transceiver unit 2001 and the processing unit 2002.

FIG. 10 is a schematic diagram of a hardware structure of an electronic device according to an embodiment of the disclosure. As shown in FIG. 10, the electronic device 4000 includes: at least one processor 4001 (only one processor is shown in FIG. 10), a memory 4002, and a computer program 4003 stored in the memory 4002 and capable of being run on the at least one processor 4001. The processor 4001 implements steps of any one of the foregoing methods when executing the computer program 4003.

Those skilled in the art may understand that FIG. 10 is only an example of the electronic device, and does not constitute a limitation on the electronic device. In practice, the electronic device may include more or less components than those shown in the figure, or combine some components or different components, for example, may further include an input/output device, a network access device, etc.

The processor 4001 may be a central processing unit (CPU), another general-purpose processor, a digital signal processor (DSP), an application specific integrated circuit (ASIC), a field-programmable gate array (FPGA), or another programmable logic device, a discrete gate or transistor logic device, or a discrete hardware component. The general-purpose processor may be a microprocessor, or the processor may be any conventional processor or the like.

In some embodiments, the memory 4002 may be an internal storage unit of the electronic device 4000, for example, a hard disk or memory of the electronic device 4000. In some other embodiments, the memory 4002 may alternatively be an external storage device of the electronic device 4000, for example, a plug-in hard disk, a smart media card (SMC), a secure digital (SD) card, or a flash card arranged on the electronic device 4000. Optionally, the memory 4002 may further include both the internal storage unit and the external storage device of the electronic device 4000. The memory 4002 is configured to store an operating system, an application program, a bootloader, data, and other programs, for example, a program code of the computer program. The memory 4002 may be further configured to temporarily store data that has been output or data to be output.

It should be noted that since content such as information interaction between the apparatuses/units and execution processes is based on the same concept as that in the method embodiments of the disclosure, for specific functions and brought technical effects, reference may be made to the method embodiments, which is not repeated herein.

Those skilled in the art can clearly understand that for convenience and brevity of description, only the division of the function units and modules described above is exemplified. In practical applications, the foregoing functions may be allocated to and completed by different function units and modules according to requirements. That is, the internal structure of the apparatus is divided into different function units or modules to complete all or some of the functions described above. The function units and modules in the embodiments may be all integrated into one processing unit, each unit may be physically present alone, or two or more units may be integrated into one unit. The integrated unit may be implemented in a form of hardware, or may be implemented in form of software. Moreover, specific names of the function units and modules are also only for the convenience of distinguishing from each other, but are not intended to limit the protection scope of the disclosure. Reference may be made to the corresponding processes in the above method embodiments for specific working processes of the units and modules of the foregoing systems, which is not repeated herein.

The embodiments of the disclosure further provide an electronic device. The electronic device includes: at least one processor, a memory, and a computer program stored in the memory and capable of being run on the at least one processor. When the processor executes the computer program, the electronic device is caused to implement the steps of any of the above method embodiments.

The electronic device may be user equipment, and is configured to perform steps performed by the user equipment, for example, configured to receive indication information and monitor a PDCCH according to the indication information. The electronic device may alternatively be a network device, and is configured to perform steps performed by the network device, for example, configured to generate and transmit indication information.

The embodiments of the disclosure further provide a computer-readable storage medium. The computer-readable storage medium stores a computer program. The computer program may implement steps of any one of the above method embodiments when executed by an electronic device.

The embodiments of the disclosure further provide a chip. The chip includes a processor. The processor is configured to read and perform a computer program stored in a memory. When the computer program is executed by the processor, an electronic device where the chip is located may implement steps of any one of the above method embodiments.

Optionally, the chip further includes a memory, and the memory is electrically connected to the processor.

Optionally, the chip may further include a communication interface.

The embodiments of the disclosure also provide a computer program product. The computer program product includes a computer program. The computer program may implement steps of the above method embodiments when executed by an electronic device.

When the integrated unit is implemented in the form of a software functional unit and sold or used as an independent product, the integrated unit may be stored in a computer-readable storage medium. Based on such understanding, all or some of procedures of the method in the foregoing embodiments of the disclosure may be implemented by a computer program instructing relevant hardware. The computer program may be stored in a computer-readable storage medium. When the computer program is executed, the steps of the above method embodiments may be implemented. The computer program includes a computer program code. The computer program code may be in a source code form, an object code form, an executable file, some intermediate forms, or the like. The computer-readable medium may at least include: any entity or apparatus capable of carrying a computer program code to a photographing apparatus/terminal device, a recording medium, a computer memory, a read-only memory (ROM), a random access memory (RAM), an electrical carrier signal, a telecommunication signal, and a software distribution medium, for example, a USB flash disk, a removable hard disk, a magnetic disk, or an optical disc. In some jurisdictions, according to legislation and patent practices, the computer-readable medium cannot be an electric carrier signal or a telecommunications signal.

In the above embodiments, the description of each embodiment has its own emphasis. Reference may be made to the relevant descriptions of other embodiments for the part not described or recorded in detail in a given embodiment.

A person of ordinary skill in the art may be aware that the exemplary units and algorithm operations described with reference to embodiments disclosed in this specification can be implemented by electronic hardware, or a combination of computer software and electronic hardware. Whether the functions are executed in a mode of hardware or software depends on particular applications and design constraint conditions of the technical solutions. Those skilled in the art can use different methods to implement the described functions for each particular application, but such an implementation should not be deemed as falling beyond the scope of the disclosure.

In the embodiments provided in the disclosure, it should be understood that the disclosed apparatus/electronic device and method can be implemented in other ways. For example, the described apparatus/electronic device embodiment is merely illustrative. For example, the division of modules or units is merely logical function division and may be other division during actual implementation. For example, a plurality of units or components may be combined or integrated into another system, or some features may be ignored or not performed. In addition, the displayed or discussed mutual coupling or direct coupling or communication connection may be implemented by using some interfaces. The indirect coupling or communication connection between the apparatuses or units may be implemented in electronic, mechanical, or other forms.

The units described as separate components may or may not be physically separated, and the components displayed as units may or may not be physical units, and may be located in one place or may be distributed over a plurality of network units. Some or all of the units may be selected according to actual needs to achieve the objectives of the solutions of the embodiments.

It should be understood that when used in the specification and the appended claims of the disclosure, the terms "comprise" or "include" indicate existence of described features, integers, steps, operations, elements, and/or components, but do not exclude existence or addition of one or more other features, integers, steps, operations, elements, components, and/or their sets.

It should also be understood that the term "and/or" as used in the specification and appended claims of the disclosure refers to and includes any and all possible combinations of one or more of the associated listed items.

As used in the specification and the appended claims of the disclosure, terms "if" may be explained as "when...", "once", "in response to determining", or "in response to detecting" according to the context. Similarly, based on the context, the phrase "if determining" or "if detecting (a stated condition or event)" may be interpreted as a meaning of "once determining... ", "in response to determining... ", "once detecting (a stated condition or event)", or "in response to detecting (a stated condition or event)".

In addition, in the description of the specification and the appended claims of the disclosure, the terms "first", "second", "'third", etc. are used only to distinguish descriptions and cannot be construed as indicating or implying relative importance.

Reference to "one example" or "some examples", etc. described in the specification of the disclosure means that a specific feature, structure, or characteristic described in connection with the embodiment is included in one or more embodiments of the disclosure. Thus, the phrases "in one example", "in some examples", "in some other examples", "in yet other examples", etc. in different places of the present description are not necessarily all referring to the same example, but mean "one or more but not all examples", unless specifically emphasized otherwise. The terms "comprise", ""encompass", "have", and their variations mean "comprise, but is not limited to", unless specifically emphasized otherwise.

The foregoing embodiments are merely intended to describe the technical solutions of the disclosure, and are not intended to limit the disclosure. Although the disclosure is described in detail with reference to the foregoing embodiments, a person of ordinary skill in the art is to understand that modifications may still be made to the technical solutions described in the foregoing embodiments, or equivalent replacements may be made to the part of the technical features. These modifications or substitutions do not make the essence of the corresponding technical solutions depart from the spirit and scope of the technical solutions in the embodiments of this application and should fall within the scope of protection of the disclosure.

## Claims

1. A method for discontinuous reception, applied to user equipment (UE), comprising:
receiving indication information transmitted by a network device, wherein the indication information is used for indicating whether data arrive ahead of time or indicating that data arrive with lag; and
monitoring a physical downlink control channel (PDCCH) according to the indication information.

2. The method according to claim 1, wherein the indication information comprises first information, the first information is used for indicating whether the data arrive ahead of time, and arrival ahead of time is used for indicating that the data arrive before the first information is received; and
the monitoring a physical downlink control channel (PDCCH) according to the indication information comprises:
monitoring, when the data arrive ahead of time, the PDCCH according to a configuration parameter of connected mode discontinuous reception (CDRX) indicated by the first information.

3. The method according to claim 2, wherein the first information comprises first downlink control information (DCI), and a first preset bit in the first DC I is used for indicating whether the data arrive ahead of time.

4. The method according to claim 3, wherein the first DCI is UE-group common signaling DCI.

5. The method according to claim 3 or 4, wherein at least one bit other than the first preset bit in the first DCI is used for indicating at least one parameter in the configuration parameters of the CDRX or indicating an identifier of a parameter set of the configuration parameters of the CDRX, and the parameter set comprises at least one configuration parameter of the CDRX.

6. The method according to any one of claims 2 to 5, wherein the configuration parameters of the CDRX comprise at least one of offset, an on duration timer, an inactivity timer, or a search space set group; and
the monitoring, when the data arrive ahead of time, the PDCCH according to a configuration parameter of CDRX indicated by the first information comprises at least one of the following operations:
starting the on duration timer ahead of time according to the offset indicated by the first information, and monitoring the PDCCH in the on duration timer; or performing monitoring by using the dense search space set group according to an indication of the first information; or performing monitoring according to the on duration timer indicated by the first information; or performing monitoring according to the inactivity timer indicated by the first information.

7. The method according to any one of claims 2 to 6, further comprising:
performing monitoring according to a first preset configuration parameter of the CDRX when the data do not arrive ahead of time, wherein the first preset configuration parameter is a preset configuration parameter corresponding to a situation that the data do not arrive ahead of time.

8. The method according to claim 1, wherein the indication information comprises second information, the second information is used for indicating that the data arrive with lag, and arrival with lag is used for indicating that the data do not arrive yet when the second information is received; and
the monitoring a physical downlink control channel (PDCCH) according to the indication information comprises:
monitoring the PDCCH according to the second information.

9. The method according to claim 8, wherein the second information comprises second DCI;the second DCI does not schedule a corresponding physical downlink shared channel (PDSCH), and the second DCI is used for indicating the arrival with lag; and
the monitoring the PDCCH according to the second information comprises:
monitoring the PDCCH by starting a first timer in response to the second DCI; or monitoring the PDCCH according to a configuration parameter of CDRX indicated by the second DCI.

10. The method according to claim 9, wherein the case that the second DCI does not schedule the corresponding PDSCH is indicated by using a time domain resource assignment (TDRA) domain in the second DCI.

11. The method according to claim 10, wherein at least one bit other than the TDRA domain in the second DCI is used for indicating at least one parameter in the configuration parameters of the CDRX or indicating an identifier of a parameter set of the configuration parameters of the CDRX, and the parameter set comprises at least one configuration parameter of the CDRX.

12. The method according to any one of claims 8 to 11, wherein the second information comprises third DCI; a PDSCH scheduled by the third DCI is a padding PDSCH; and
the monitoring the PDCCH according to the second information comprises:
monitoring the PDCCH by starting a second timer in response to the third DCI.

13. A method for discontinuous reception, applied to a network device, comprising:
transmitting indication information to user equipment (UE), wherein the indication information is used for indicating whether data arrive ahead of time or for indicating that data arrive with lag.

14. The method according to claim 13, wherein the indication information comprises first information, the first information is used for indicating whether the data arrive ahead of time, and the arrival ahead of time is used for indicating that the data arrive when the first information is transmitted.

15. The method according to claim 14, wherein the first information comprises first downlink control information (DCI), and a first preset bit in the first DCI is used for indicating whether the data arrive ahead of time.

16. The method according to claim 15, wherein the first DCI is UE-group common signaling DCI.

17. The method according to claim 15 or 16, wherein at least one bit other than the first preset bit in the first DCI is used for indicating at least one parameter in the configuration parameters of the CDRX or indicating an identifier of a parameter set of the configuration parameters of the CDRX, and the parameter set comprises at least one configuration parameter of the CDRX.

18. The method according to any one of claims 14 to 17, wherein the configuration parameters of the CDRX comprise at least one of offset, an on duration timer, an inactivity timer, or a search space set group.

19. The method according to any one of claims 13 to 17, wherein the indication information comprises second information, the second information is used for indicating that the data arrive with lag, and the arrival with lag is used for indicating that the data do not arrive when the second information is transmitted.

20. The method according to claim 19, wherein the second information comprises second DCI; and the second DCI does not schedule a corresponding physical downlink shared channel (PDSCH), and the second DCI is used for indicating the arrival with lag.

21. The method according to claim 20, wherein the case that the second DCI does not schedule the corresponding PDSCH is indicated by using a time domain resource assignment (TDRA) domain in the second DCI.

22. The method according to claim 21, wherein at least one bit other than the TDRA domain in the second DCI is used for indicating at least one parameter in the configuration parameters of the CDRX or indicating an identifier of a parameter set of the configuration parameters of the CDRX, and the parameter set comprises at least one configuration parameter of the CDRX.

23. The method according to claim 21, wherein the second information comprises third DCI; and a PDSCH scheduled by the third DCI is a padding PDSCH.

24. An apparatus for discontinuous reception, comprising:
a reception unit configured to receive indication information transmitted by a network device, wherein the indication information is used for indicating whether data arrive ahead of time or indicating that data arrive with lag; and
a processing unit configured to monitor a physical downlink control channel (PDCCH) according to the indication information.

25. An apparatus for discontinuous reception, comprising:
a transmission unit configured to transmit indication information to user equipment (UE), wherein the indication information is used for indicating whether data arrive ahead of time or for indicating that data arrive with lag.

26. User equipment, comprising a memory, a processor, and a computer program stored in the memory and executable on the processor, wherein the user equipment is caused to implement the method according to any one of claims 1 to 12 when the processor performs the computer program.

27. A network device, comprising a memory, a processor, and a computer program stored in the memory and executable on the processor, wherein the network device is caused to implement the method according to any one of claims 13 to 23 when the processor performs the computer program.

28. A computer-readable storage medium, storing a computer program, wherein the computer program implements the method according to any one of claims 1 to 12 or the method according to claim 13 or 23 when executed by an electronic device.
